# EUROPÄISCHE PATENTSCHRIFT

(11) **EP 2 283 216 B1**
(45) Veröffentlichungstag und Bekanntmachung des Hinweises auf die Patenterteilung: **25.01.2012**
(21) Anmeldenummer: 09741988.1
(22) Anmeldetag: 23.04.2009
(51) Int. Cl.: F01N 3/28, B01J 35/04

(54) **WABENKÖRPER AUS METALLISCHEN FOLIEN UND VERFAHREN ZU DESSEN HERSTELLUNG**
HONEYCOMB BODY CONSISTING OF METAL FOILS AND METHOD FOR THE PRODUCTION THEREOF
ÉLÉMENT ALVÉOLÉ EN FEUILLES MÉTALLIQUES ET PROCÉDÉ DE FABRICATION CORRESPONDANT

(30) Priorität: 07.05.2008 DE 102008022519
(43) Veröffentlichungstag der Anmeldung: 16.02.2011
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2009/054921
(87) Internationale Veröffentlichungsnummer: WO 2009/135770

(56) Entgegenhaltungen:
- EP-A- 0 988 892

## Beschreibung

Die vorliegende Erfindung betrifft einen Wabenkörper aus zumindest einer metallischen glatten und zumindest einer strukturierten Folie und ein Verfahren zu dessen Herstellung zum Einsatz des Wabenkörpers in Abgassystemen von Verbrennungskraftmaschinen, insbesondere bei Kraftfahrzeugen.

Metallische Folien werden seit langer Zeit bei der Herstellung von Wabenkörpern, insbesondere für Abgassysteme von Verbrennungskraftmaschinen, eingesetzt. Wegen der hohen Temperaturen bei derartigen Anwendungen werden meist Chrom- und Aluminiumhaltige Stähle eingesetzt, die in besonderer Weise hochtemperatur-korrosionsfest sind. Typische Folien haben dabei eine Dicke von 20 um bis 180 µm (Mikrometer) und werden regelmäßig durch Walzen hergestellt. Bei der Verwendung solcher Folien für metallische Wabenkörper und andere Komponenten zur Abgasreinigung müssen besondere Anforderungen an die Oberfläche gestellt werden.

Auch sind Wabenkörper bekannt, die nur in Teilbereichen Verbindungen, insbesondere durch Lot, zwischen den einzelnen metallischen Folien aufweisen, so dass die Wabenkörperstruktur in bestimmten Bereichen eine hohe Steifigkeit und in anderen Bereichen eine hohe Flexibilität gegenüber den wechselnden Belastungen zeigt. Neben den vorbestimmten Verbindungsteilbereichen, die durch das Aufbringen von Lotmaterial erzeugt werden, weisen die Wabenkörper jedoch teilweise auch zusätzliche Verbindungen auf, die insbesondere durch Diffusion erzeugt werden. Diese Diffusionsverbindungen zwischen den einzelnen Folien werden insbesondere während und/oder nach der Herstellung des Wabenkörpers durch dessen thermische Behandlung hervorgerufen. Dabei ist die Neigung der metallischen Oberflächen der Folien eine Diffusionsverbindung miteinander einzugehen, unter anderem von der Rauhigkeit der einzelnen Oberflächen abhängig, die im Wesentlichen durch den Walzprozess der Folien erzeugt wird.

Solche Diffusionsverbindungen sind z.B. aus der EP-A1-0 988 882 bekannt. Dort wird ein metallischer Katalysatorträgerkörper offenbart, der aus glatten und gewellten Metallfolien hergestellt ist. Insbesondere werden hierbei Metallfolien eingesetzt, die alle eine einheitliche Rauhigkeit Ra im Bereich von 0,001 bis 0,3 Mikrometer aufweisen. Dabei werden nach der Generierung von Diffusionsanbindungen in einer speziellen Wärmebehandlung einheitliche Rauhigkeiten Ra im Bereich von 0,001 bis 2,0 Mikrometer an allen Metallfolien festgestellt.

Für die Herstellung der Lötverbindungen der metallischen Folien untereinander kommt es unter anderem darauf an, dass sich das Lot, welches beispielsweise in Pulverform in bestimmten Bereichen aufgebracht wird, nur über einen kleinen Umgebungsbereich durch Fließen verteilt, wenn die Schmelztemperatur erreicht wird. Dabei hängen die Fließ- und Benetzungseigenschaften eines Lotes auf einer Oberfläche ebenfalls von der Oberflächenrauhigkeit des verwendeten Materials ab.

Die Eigenschaft der Hochtemperaturkorrosionsfestigkeit der Folien ergibt sich auch daraus, dass sich an der Oberfläche dieser Folien eine schützende Oxidschicht bildet, die bei Aluminium umfassenden Folien hauptsächlich aus Aluminiumoxid, insbesondere aus γ-(Gamma-)Aluminiumoxid, besteht.

Im Allgemeinen werden aus metallischen Folien hergestellte Wabenkörper in Abgassystemen zusätzlich mit einem katalytisch aktiven Material beschichtet, wobei die Folie eine gute Haftungseignung für einen solchen Washcoat haben sollte.

Aus den obigen Ausführungen geht hervor, dass eine Vielzahl von Erfordernissen an die metallischen Folien existiert, um besonders dauerfeste Wabenkörper zu erschaffen. Dieses Problem konnte bislang noch nicht für alle Einsatzzwecke solcher Wabenkörper zielgerichtet gelöst werden.

Aufgabe der vorliegenden Erfindung ist es, einen Wabenkörper aus metallischen Folien anzugeben, der die eingangs geschilderten Probleme wenigstens teilweise löst und insbesondere eine gezielte und dauerhafte Verbindung der Folien zu einem Wabenkörper gewährleistet, die Voraussetzungen hinsichtlich Diffusionsneigung sowie Benetzungs- und Fließlähigkeit eines Lotes verfüllt, und gleichzeitig auch kostengünstig in der Herstellung ist. Außerdem soll ein Verfahren zur einfachen und effektiven Herstellung eines solchen Wabenkörpers angegeben werden.

Diese Aufgaben werden gelöst durch einen Wabenkörper gemäß dem Anspruch 1 und einem Verfahren gemäß Anspruch 11. Vorteilhafte Ausgestaltungen und Einsatzgebiete der Erfindung sind in den jeweils abhängigen Ansprüchen angegeben. Es ist darauf hinzuweisen, dass die in den abhängig formulierten Ansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Ein erfindungsgemäßer Wabenkörper ist gebildet zumindest aus wenigstens einer metallischen glatten Folie und wenigstens einer metallischen strukturierten Folie, wobei die glatte Folie gegenüber der strukturierten Folie eine unterschiedliche gemittelte Rauhigkeit aufweist.

Dabei wird die wenigstens eine metallische glatte und wenigstens eine strukturierte Folie bevorzugt aus einem Stahl mit Chrom- und Aluminiumanteilen hergestellt, insbesondere aus Stahl mit einem Aluminiumgehalt von 1 bis 5 Gew.-%. Ein Aluminiumgehalt bis zu 5 Gew.-% ist ohne wesentliche Nachteile für die sonstigen Eigenschaften einer metallischen Folie besonders günstig für die Hochtemperaturkorrosionsfestigkeit.

Die metallischen Folien können zur Erzeugung eines Wabenkörpers mit für ein Abgas durchströmbaren Kanälen gewickelt, gewunden und/oder gestapelt werden, wobei dabei im Allgemeinen wechselweise glatte und strukturierte Folien aufeinander liegen.

Dabei sind die glatten Folien im Sinne der Erfindung nicht ausschließlich eben ausgeführt, sondern können gegebenenfalls Mikrostrukturierungen (wie z.B. Hindernisse, Turbulenzerzeuger, Strömungsumlenker oder andere Elemente zur Strömungsbeeinflussung) und/oder Durchlässe aufweisen, die zur Erhöhung der Effizienz bzw. Verbesserung der Vergleichmäßigung des Abgasstroms durch den Wabenkörper beitragen. Die strukturierten Folien weisen insbesondere eine wellenförmige (sinus-/omega-förmig, dreieckig, vieleckig, usw.) Struktur auf, wobei auch hier zusätzlich Durchlässe, Hindernisse, Turbulenzerzeuger, Strömungsumlenker oder andere Elemente zur Strömungsbeeinflussung vorgesehen sein können. Dabei gilt, dass die Mikrostruktur der glatten Folien kleiner (also mit einer geringen Höhe quer zur Folie) als die Struktur der strukturierten Folien ausgeführt ist.

Erfindungsgemäß weist die wenigstens eine glatte Folie gegenüber der wenigstens einen strukturierten Folie eine unterschiedliche, also größere oder geringere gemittelte Rauhigkeit auf. Insbesondere ist dabei die gemittelte Rauhigkeit der wenigstens einen glatten Folie größer als die Rauhigkeit der wenigstens einen strukturierten Folie.

Bei den hier in Bezug genommenen gemittelten Rauhigkeitswerten handelt es sich bevorzugt um Rauhigkeiten, die nach dem Tastschnittverfahren bestimmt werden. Dieses Verfahren ist beispielsweise beschrieben in dem Artikel "Rauheitsmessung an gewalzten Faltblechen" in der Zeitschrift "Stahl und Eisen 109" (Jahrgang 1989 Nr. 12; Seite 589 und 590). Dabei wird die gemittelte Rauhigkeit entweder als arithmetischer Mittelwert der Rauhigkeit ("mittlere Rauhigkeit Rₐ") angegeben oder als "gemittelte Rauhtiefe Rₘₐₓ". Die im Rahmen dieser Erfindung genannten gemittelten Rauhigkeiten stellen dabei für die jeweilige Folienoberfläche repräsentative, Rauhigkeiten dar.

Die Unterschiede der gemittelten Rauhigkeiten der glatten Folie gegenüber der strukturierten Folie lassen sich insbesondere jeweils mit Bezug auf diese mittlere Rauhigkeit Rₐ und/oder diese gemittelte Rauhtiefe Rₘₐₓ feststellen.

Die mittlere Rauhigkeit Rₐ ist definiert als das arithmetische Mittel des Abstandes von Messpunkten auf einer Oberfläche zu einer Mittellinie, wobei die Mittellinie innerhalb einer Bezugsstrecke das wirkliche Profil der Oberfläche derart schneidet, dass die Summe der betragsmäßigen Profilabweichungen, bezogen auf die Mittellinie, minimal wird.

Die gemittelte Rauhtiefe Rₘₐₓ ist definiert als der Mittelwert aus fünf Werten, die jeweils, bei der Messung von Oberflächenprofilen, der Differenz von dem maximalen und dem minimalen Messpunkt auf jeweils einer Bezugsstrecke entsprechen.

Die gemittelte Rauhigkeit der Folien wird ohne Beschichtung ermittelt und ist bezogen auf Folien ohne Oxidschicht.

Bevorzugt ist, dass jeweils beide Werte für R₄ und Rₘₐₓ der beiden Folien unterschiedlich sind, insbesondere bei der glatten Folie größer.

Die erfindungsgemäβe Bildung eines Wabenkörpers durch Folien mit unterschiedlicher gemittelter Rauhigkeit hat sich aus intensiven Untersuchungen ergeben, die zeigen, dass durch die Erzeugung einer erhöhten gemittelten Rauhigkeit auf nur einer, auf der wenigstens einen glatten oder auf der wenigstens einen strukturierten, Folie die Diffusionsverbindungsneigung verringert werden kann.

Dabei bietet sich insbesondere die glatte Folie zur Erzeugung einer erhöhten Rauhigkeit an. Die glatte Folie und die strukturierte Folie weisen für die Herstellung eines Wabenkörpers regelmäßig im Wesentlichen hinsichtlich Breite und Länge gleiche Abmessungen auf. Die zu strukturierende Folie ist vor der Strukturierung demnach in einer größeren ersten Länge als die glatte Folie bereitzustellen, so dass die Reduzierung der ersten Länge, den der Bearbeitungsschritt zur Herstellung der Struktur hervorruft, kompensiert wird. Somit ist aufgrund der Herstellungskosten der Rauhigkeitserhöhung von glatten Folien durch einen speziell abgestimmten Walzprozess kostengünstiger.

Vorzugsweise ist der Wabenkörper so gestaltet, dass die wenigstens eine glatte Folie eine mittlere Rauhigkeit Rₐ von 0,3 µm bis 0,7 µm (Mikrometer) aufweist, bevorzugt eine mittlere Rauhigkeit Rₐ von 0,5 µm bis 0,7 µm. Dadurch wird einerseits die Neigung der Folien, Diffusionsverbindungen auszubilden, wirksam unterdrückt und andererseits eine ausreichend geringe Rauhigkeit zur Gewährleistung der Fließ- und Benetzungseigenschaften des Lotes bereitgestellt. Eine angegebene Obergrenze für die Rauhigkeit gewährleistet ein gutes Fließ- und Benetzungsverhalten des Lotes auf den Oberflächen.

Die derzeit üblichen Herstellungsverfahren solcher Folien durch Walzen erzeugen zumeist eine mittlere Rauhigkeit Rₐ, die in einem Bereich von 0,001 µm bis 0,3 µm, insbesondere in einem Bereich von 0,1 µm bis 0,3 µm, liegt. Eine Erhöhung dieser mittleren Rauhigkeit Rₐ kann durch geeignet angepasste Walzen oder Walzparameter erreicht werden. Dazu ist z. B. eine Behandlung der Walzen im letzten Walzschritt durch Bürsten oder Strahlen (oder vergleichbare Maßnahmen) nötig, um Folien mit einer mittleren Rauhigkeit Rₐ in einem Bereich von 0,3 µm bis 0,7 µm bereitzustellen.

In Weiterbildung des Wabenkörpers wird weiter vorgeschlagen, dass die wenigstens eine strukturierte Folie eine mittlere Rauhigkeit Rₐ von 0,001 bis 0,3 µm aufweist. Ganz besonders bevorzugt liegt die mittlere Rauhigkeit Rₐ im Bereich von 0,1 bis 0,2 µm. Somit wird die Fließ- und Benetzungsfähigkeit für Haft- bzw. Lotmaterial gewährleistet und gleichzeitig eine kostengünstige Herstellung ermöglicht.

Vorzugsweise werden die Rauhigkeiten (Rₐ und/oder Rₘₐₓ) der Folien des Wabenkörpers quer zu deren Walzrichtung gemessen. Aufgrund des Walzprozesses ist es möglich, dass gerichtete Rauhigkeiten in den Folien erzeugt werden. Durch diese bevorzugte Messrichtung wird dann die maximale Rauhigkeit der Oberfläche ermittelt.

Bei der Herstellung des Wabenkörpers ist eine Anordnung der Folien im Wabenkörper mit gleicher Orientierung der Walzrichtung bevorzugt.

Die für die Herstellung eines Wabenkörpers verwendeten Folien weisen eine Oberseite und eine Unterseite auf, die im Folgenden als Oberflächen angegeben werden. Gemäß einer Weiterbildung des Wabenkörpers weist die wenigstens eine glatte Folie auf ihren beiden Oberflächen gegenüber den strukturierten Folien eine unterschiedliche Oxidschichtdicke auf.

Im geschichteten und/oder gewickelten bzw. gewundenen Wabenkörper gibt es Berührungsstellen zwischen den einzelnen Folien und/oder zwischen den Folien und anderen Bauteilen, beispielsweise einem Mantelrohr. Mittels verschiedener bekannter Verfahren können in manchen Bereichen an Berührungsstellen feste Verbindungsstellen ausgebildet werden, beispielsweise durch Aufbringen von Lot und anschließendes Erhitzen. Die entstehenden hartgelöteten Verbindungen werden durch eine (dünne) Oxidschicht nicht wesentlich verschlechtert. Andererseits verhindert die Oxidschicht in Verbindung mit der mittleren Rauhigkeit Rₐ von 0,3 bis 0,7 µm, dass sich an Berührungsstellen, die nicht verbunden werden sollen, bei der Erhitzung des Wabenkörpers unerwünschte Diffusionsverbindungen ausbilden. Dafür ist die Oxidschicht dick genug auszulegen, so dass die gewünschte selektive Herstellung von Verbindungsstellen durch die Rauhigkeit und die Oxidschicht begünstigt wird. Auch hier ist die angegebene Obergrenze der mittleren Rauhigkeit nicht zu überschreiten, um darauf noch Lotverbindungen sicher zu erzeugen.

Vorzugsweise weist die wenigstens eine glatte Folie des Wabenkörpers eine grö-βere Oxidschichtdicke als die wenigstens eine strukturierte Folie auf. Da die Oxidschichtdicke vor der Herstellung der Struktur des Wabenkörpers auf den einzelnen Folien erzeugt wird, sind auch hier gegebenenfalls speziell abgestimmte Fertigungsschritte notwendig, um die gewünschten Eigenschaften der Folien zu erzeugen. Insbesondere wird die Oxidschichtdicke durch eine Temperaturbehandlung der Folien an Luft erzeugt, z.B. in einer Glühstrecke, also einer Durchlaufeinrichtung für die Folien mit Heizmitteln, oder in einem Ofen. Dabei ist auch hier unter Berücksichtigung der Herstellungskosten eine Erhöhung der Oxidschichtdicke an der wenigstens einen glatten Folie bevorzugt.

Gemäß einer Weiterbildung des Wabenkörpers liegt die Oxidschichtdicke der wenigstens einen glatten Folie in einem Bereich von 60 bis 80 nm (Nanometer). Dieser Bereich hat sich als besonders günstig für die Herstellung von Wabenkörpern mit den gewünschten Eigenschaften erwiesen, insbesondere für die Anwendung in Abgasanlagen von Kraftfahrzeugen. Die Oxidschicht beeinflusst so die einzelnen Herstellungsschritte, insbesondere das Auftragen und Verteilen eines Haftmittels bzw. Lotes sowie die Ausbildung von Lotverbindungen nicht negativ.

Es hat sich gezeigt, dass die Erzeugung einer erhöhten Oxidschichtdicke an nur einer Folie in Verbindung mit den erfindungsgemäßen Rauhigkeitsbereichen zu einer Verringerung der Diffusionsanbindungen führt. So wurden zum Beispiel bei üblichen mittleren Rauhigkeiten Rₐ von 0,001 bis 0,3 µm und üblichen Oxidschichtdicken von 20 bis 40 Nanometern an allen Folien ungefähr bei 30 % der nicht durch Lot zu verbindenden Berührungsstellen zwischen den einzelnen Folien unerwünschte Diffusionsanbindungen erzeugt. Durch die Ausführung wenigstens einer Folie mit einer mittleren Rauhigkeit Rₐ von 0,3 bis 0,7 µm und einer mittleren Oxidschichtdicke von 60 bis 80 Nanometern werden entsprechende Diffusionsverbindungen nur an maximal ca. 5 % der Berührungsstellen erzeugt.

Durch eine solche Ausgestaltung des Wabenkörpers, z.B. in Verbindung mit selektiver Belotung im Aufdruckverfahren (Ink-Jet), werden die vorbestimmten flexiblen Eigenschaften des Wabenkörpers erreicht. Gleichzeitig bleiben Aufwand und Herstellungskosten für die spezifische Vorbereitung akzeptabel, zumal zumeist nur die Hälfte der für den Wabenkörper benötigten Folien vorab behandelt werden muss.

Außerdem ist zu berücksichtigen, dass für einen Wabenkörper ggf. unterschiedliche Mengenanteile an glatten und gewellten Folien(-abschnitten) erforderlich sind. So machen glatte Folien(-abschnitte) z.B. nur einen Oberflächen- bzw. Gewichtsanteil von 30 bzw. 40 % des gesamten Wabenkörpers aus. Müssen nun also besondere (Kosten verursachende) Maßnahmen zur Einstellung einer erhöhten Rauhigkeit getroffen werden, so wird hier vorgeschlagen, diese auf den geringeren Anteil des Wabenkörpers anzuwenden. Darüber hinaus wird so verhindert, dass eine "nachträgliche" Strukturierung der rauhen Folie die eingestellte Rauhigkeit wieder verändert.

Ungeachtet dessen sei hier darauf hingewiesen, dass auch eine inverse Ausgestaltung der Rauhigkeiten der glatten Folie und der strukturierten Folie ggf. sinnvoll sein kann und grundsätzlich auch im Rahmen der Erfindung liegt. Dann hat die wenigstens eine glatte Folie eine mittlere Rauhigkeit Rₐ von 0,001 bis 0,3 Mikrometer während die strukturierte Folie eine mittlere Rauhigkeit Rₐ 0,3 bis 0,7 Mikrometer aufweist.

Gemäß einer weiteren vorteilhaften Ausführungsform des Wabenkörpers enthält die wenigstens eine glatte Folie und/oder die wenigstens eine strukturierte Folie 14 bis 25 Gew.-% Chrom und 3 bis 7 Gew.-% Aluminium. Als Basis wird Eisen vorgeschlagen. Die hier angegebenen Aluminium-Gehalte dienen insbesondere der Oxidschichtbildung und die Chrom-Gehalte insbesondere der Korrosionsbeständigkeit.

In Weiterbildung des Wabenkörpers wird vorgeschlagen, dass nur selektiv an vorbestimmten Bereichen Verbindungsstellen zwischen benachbarten Folien durch Hartlöten hergestellt sind. Insbesondere wird auch das Verfahren des Hochtemperaturvakuunnlötens angewendet. Trotz der hohen Temperatur bei diesen Lötverfahren entstehen keine oder nur wenige bzw. sehr schwache Diffusionsverbindungen in den nicht gelöteten Bereichen, welche jedoch das thermische Expansions- und/oder Kompressionsverhalten des Wabenkörper im Betrieb nicht wesentlich beeinflussen.

Bevorzugt ist der Wabenkörper mit einer zusätzlichen Beschichtung versehen, die eine Oxidschicht wenigstens teilweise überdeckt. Dabei wird hier insbesondere auf einen Washcoat und/oder eine Beschichtung mit katalytisch aktiven Materialien Bezug genommen. Dabei sind für die Anwendung bei der Abgasreinigung von Verbrennungsktmaschinen in einer solchen zusätzlichen Beschichtung typischerweise Edelmetalle wie Platin oder Rhodium enthalten. Diese zusätzliche Beschichtung wird nach der Fertigstellung (Löten) der Wabenkörperstruktur vorgenommen.

Die in der Einleitung definierten Aufgaben werden weiter gelöst durch ein Verfahren zur Herstellung eines erfindungsgemä-βen Wabenkörpers, umfassend wenigstens die folgenden Schritte:
a) Bereitstellen von wenigstens einer glatten Folie und wenigstens einer strukturierten Folie mit voneinander unterschiedlichen Rauhigkeiten,
b) Ausbilden einer Oxidschicht mit einer ersten Oxidschichtdicke, bei der wenigstens einen glatten Folie oder der wenigstens einen strukturierten Folie,
c) Ausbilden einer Wabenstruktur aus der wenigstens einen glatten Folie und der wenigstens einen strukturierten Folie,
d) Einfügen der Wabenstruktur in ein Gehäuse,
e) Ausbilden fügetechnischer Verbindungen.

Die unterschiedlichen Rauhigkeiten der jeweils wenigstens einen glatten und strukturierten Folie werden, wie beschrieben, durch abgestimmte Walzverfahren bzw. Walzparameter erzeugt, können insbesondere aber auch durch nachträgliche Behandlungen der Folien selbst durch Bürsten oder Strahlen hergestellt werden.

Das Ausbilden der Oxidschicht erfolgt bevorzugt allein an der wenigstens einen (bzw. allen) glatten Folie. Dabei wird die Oxidschicht bevorzugt in einem Durchlaufverfahren erzeugt, in dem die Folie von einem Coil abgewickelt und durch eine Heizeinrichtung, z.B. eine Glühstrecke, befördert wird. Danach werden die Folien zur Herstellung des Wabenkörpers abgelängt und bereitgestellt oder unmittelbar im Anschluss an die Heizeinrichtung zu einem Wabenkörper geschichtet und/oder gewickelt oder geschlungen. Dabei bilden die Folien zusammen eine Wabenstruktur mit einer Vielzahl von Kanälen, die bevorzugt im Wesentlichen parallel zu einander verlaufen. Diese Wabenstruktur wir bevorzugt (im wesentlichen nur) durch Lötverbindungen fixiert, die die Folien miteinander ausbilden, wobei diese bevorzugt auch alle mit allen ihren Enden an dem Gehäuse anliegen und dort ebenfalls stoffschlüssig verbunden sind (bevorzugt gemeinsam in Schritt e)).

Der Schritt b) des Verfahrens zum Ausbilden einer Oxidschicht mit einer ersten Oxidschichtdicke wird bevorzugt bei Temperaturen von mindestens 750 °C an Luft und während einer Zeit von 4 bis 8 Sekunden durchgeführt. Dabei ist es von besonderem Vorteil, wenn die Oxidschicht auf allen Oberflächen der so gebildeten Folie eine etwa gleichmäßige Dicke mit einer Toleranz von weniger als 10 %, vorzugsweise weniger als 5 %, aufweist. Bei der gezielten selektiven Herstellung von Verbindungsstellen und der gezielten Verhinderung von Verbindungen in anderen Bereichen ist es wichtig, dass überall an den Berührungsstellen ähnliche Bedingungen herrschen, weshalb eine geringe Toleranz der Oxidschicht von Vorteil ist.

Die Erfindung findet bevorzugt Einsatz in einem Kraftfahrzeug.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf diese jedoch nicht beschränkt ist. Es zeigen schematisch:
- Fig. 1:: den stirnseitigen Querschnitt eines Wabenkörpers,
- Fig. 2:: Berührungsstellen zwischen glatten und strukturierten Folien,
- Fig. 3:: eine weitere Ansicht von Berührungsstellen zwischen glatten und strukturierten Folien,
- Fig. 4:: eine Folie in einer teilweise geschnittenen perspektivischen Darstellung, und
- Fig. 5:: die Anordnung eines Wabenkörpers in einer Abgasanlage

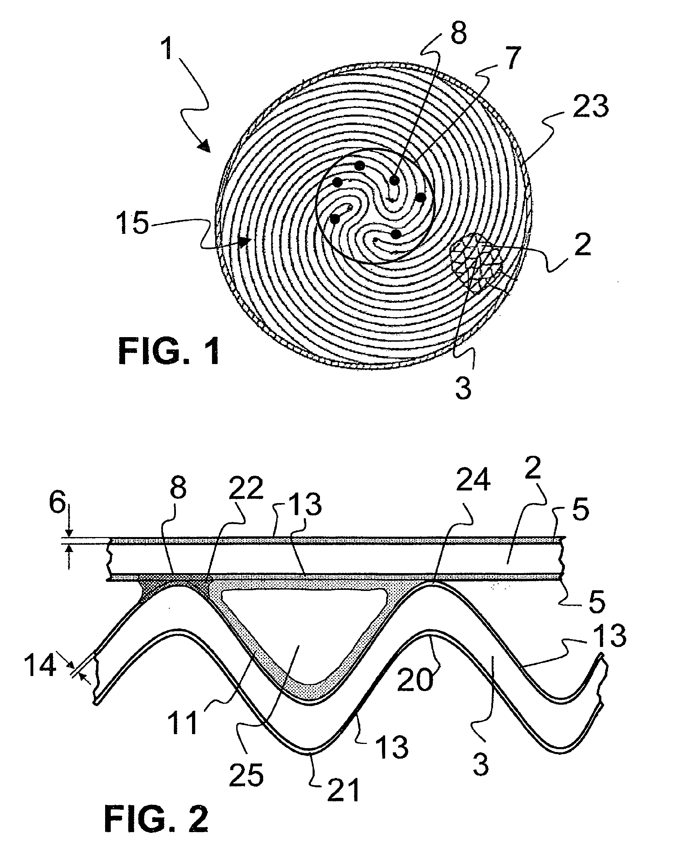

Fig. 1 zeigt schematisch in stirnseitiger Ansicht einen Wabenkörper 1, der aus glatten Folien 2 und strukturierten Folien 3 aufgebaut ist, die in einem Gehäuse 23 angeordnet sind. Auf die genaue Form der hier aus gewundenen Folien 2, 3 erzeugten Wabenstruktur 15 kommt es im vorliegenden Fall nicht an. Die Erfindung kann praktisch auf alle bekannten Formen von metallischen Wabenkörpern angewendet werden. Beispielhaft angeführt ist hier ein Bereich 7, in dem Verbindungsstellen 8 zwischen benachbarten Folien 2, 3 z. B. durch Hartlöten hergestellt sind, so dass hier eine hohe Steifigkeit des Wabenkörpers 1 gegeben ist. Dieser Bereich 7, innerhalb dessen einzelne Verbindungsstellen 8 selektiv vorgesehen sind, kann in beliebiger Weise innerhalb des Wabenkörpers 1 und natürlich auch bezogen auf Verbindungen zwischen Folien 2, 3 und Gehäuse 23 positioniert sein.

Fig. 2 zeigt schematisch die Berührungsstellen 24 zwischen glatten und strukturierten Folien 2, 3 innerhalb des Wabenkörpers 1. Dabei ist die glatte Folie 2 mit der strukturierten Folie 3 im Bereich der Verbindungsstelle 8 durch das Lot 22 verbunden. Die strukturierte Folie 3 weist hier eine Struktur aus Wellenbergen 20 und Wellentälern 21 auf, durch die in Verbindung mit der glatten Folie 2 durchströmbare Kanäle 25 gebildet werden. Dabei weisen die Folien 2, 3 auf ihren beiden Oberflächen 5 Oxidschichten 13 auf, die wie in Fig. 2 gezeigt, auf der glatten Folie 2 in einer größeren ersten Oxidschichtdicke 6 gegenüber der zweiten Oxidschichtdecke 14 der strukturierten Folie 3 ausgebildet sind. Durch diese vergrö-βerte erste Oxidschichtdicke 6 auf der glatten 2 wird eine Diffusionsverbindung 10 zwischen der glatten Folie 2 und der strukturierten Folie 3 verhindert. Fig. 2 zeigt weiter, dass innerhalb der Kanäle 25, die durch die glatte Folie 2 und die strukturierte Folie 3 gebildet werden, auf den Folien 2, 3 eine weitere Beschichtung 11 vorgesehen ist. Diese Beschichtung 11 umfasst insbesondere einen sogenannten Washcoat und/oder katalytisch aktive Materialien.

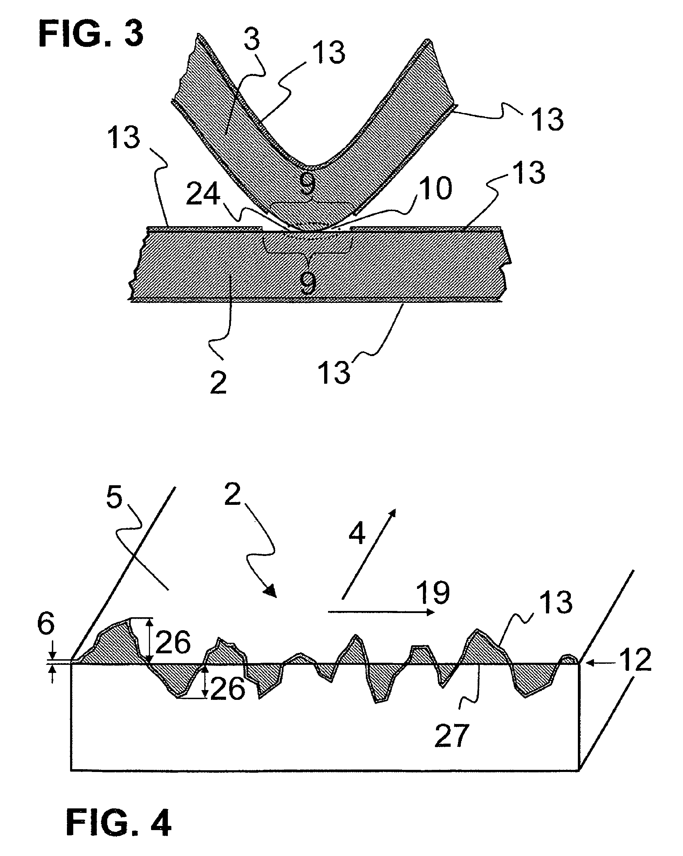

Fig. 3 zeigt schematisch die Situation einer Berührungsstelle 24 zwischen einer glatten Folie 2 und einer strukturierten Folie 3, wenn in einer Zone 9 die Oxidschicht 13 nur in unzureichendem Maße ausgebildet ist. Unzureichend bedeutet hier, dass die Oxidschicht 13 entweder fehlt oder zu dünn ausgebildet ist, insbesondere bei beiden Folien geringer als 50 nm (Nanometer). In diesem Fall bildet sich eine Diffusionsverbindung 10 an der Berührungsstelle 24 aus, wenn der Wabenkörper 1, z.B. zur Erzeugung der Lotverbindungen, aufgeheizt wird.

Fig. 4 zeigt schematisch in einer teilweise geschnittenen perspektivischen Ansicht und maßstäblich übertrieben die Situation bezüglich Oxidschicht 13 und Rauhigkeit 12 an der Oberfläche 5 einer glatten Folie 2. Solche Folien 2, 3 werden typischerweise in langen Bahnen durch Walzen hergestellt, wobei hier die Walzrichtung 4 durch einen Pfeil angedeutet ist. Quer dazu liegt die Messrichtung 19, in der die Rauhigkeit 12 hier ermittelt wird. Man erkennt, dass die Oxidschicht 13 mit der ersten Oxidschichtdicke 6 eine kleine Dimension im Verhältnis zur Rauhigkeit 12 der Oberfläche 5 hat, also im Wesentlichen dem Verlauf der Oberflächenkontur folgt und diese nicht etwa ausgleicht. Die Rauhigkeit 12 ist schematisch durch die schraffierten Flächen angedeutet. An der Oberfläche 5 bilden sich bezogen auf eine Mittellinie 27 Berge und Vertiefungen unterschiedlicher Abweichungen 26 heraus, wobei die gemittelte Rauhigkeit Rₐ einen Durchschnittswert für die Abweichungen 26 dieser Berge und Täler von der Mittellinie 27 angibt. Es gibt verschiedene Möglichkeiten, die Rauhigkeiten 12 an der Oberfläche 5 zu beeinflussen. So kann sie durch Polieren verringert und durch Bürsten oder Strahlen mit geeigneten Werkzeugen vergrößert werden.

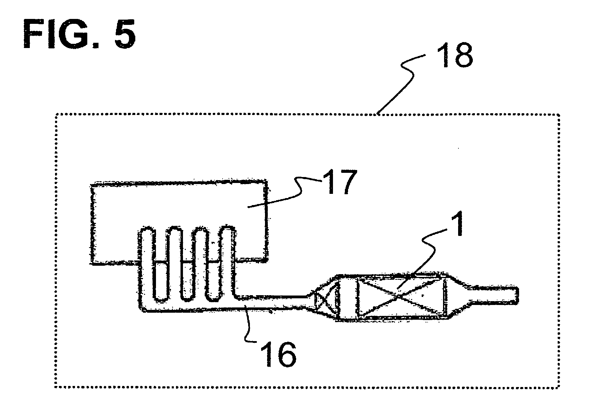

Fig. 5 zeigt die Verwendung eines erfindungsgemäßen Wabenkörpers 1 innerhalb eines Abgassystems 16 einer Verbrennungskraftmaschine 17 eines Kraftfahrzeuges 18.

### Bezugszeichenliste

- 1: Wabenkörper
- 2: Glatte Folie
- 3: Strukturierte Folie
- 4: Walzrichtung
- 5: Oberfläche
- 6: Erste Oxidschichtdicke
- 7: Bereich
- 8: Verbindungsstelle
- 9: Zone
- 10: Diffusionsverbindung
- 11: Beschichtung
- 12: Rauhigkeit
- 13: Oxidschicht
- 14: Zweite Oxidschichtdicke
- 15: Wabenstruktur
- 16: Abgassystem
- 17: Verbrennungskraftmaschine
- 18: Kraftfahrzeug
- 19: Messrichtung
- 20: Wellenberg
- 21: Wellental
- 22: Lot
- 23: Gehäuse
- 24: Berührungsstelle
- 25: Kanal
- 26: Abweichung
- 27: Mittellinie

## Patentansprüche

1. Wabenkörper (1), gebildet zumindest aus wenigstens einer metallischen glatten Folie (2) und wenigstens einer metallischen strukturierten Folie (3), wobei die glatte Folie (2) gegenüber der strukturierten Folie (3) eine unterschiedliche. also größere oder geringere. gemittelte Rauhigkeit (12) aufweist, wobei die eine Folien eine mittlere Rauhigkeit (12) Rₐ von 0.001 bis 0,3 Mikrometer und die andere Folie eine mittlere Rauhigkeit (12) Rₐ von 0,3 bis 0,7 Mikrometern aufweist, wobei die gemittelte Rauhigkeit der Folien ohne eine Beschichtung ermittelt wird und bezogen ist auf Folien ohne eine Oxidschicht.

2. Wabenkörper (1) nach Anspruch 1, wobei die wenigstens eine glatte Folie (2) eine mittlere Rauhigkeit (12) Rₐ von 0,3 bis 0,7 Mikrometer aufweist, insbesondere eine mittleren Rauhigkeit (12) Rₐ von 0,5 bis 0,7 Mikrometer.

3. Wabenkörper (1) nach Anspruch 1 oder 2, wobei die wenigstens eine strukturierte Folie (3) eine mittlere Rauhigkeit (12) Rₐ von 0,001 bis 0,3 Mikrometer aufweist, insbesondere eine mittlere Rauhigkeit (12) Rₐ von 0,1 bis 0,2 Mikrometer.

4. Wabenkörper (1) nach einem der vorhergehenden Ansprüche, wobei die Rauhigkeiten (12) der Folien (2, 3) quer zur Walzrichtung (4) gemessen sind.

5. Wabenkörper (1) nach einem der vorhergehenden Ansprüche, wobei die wenigstens eine glatte Folie (2) auf ihren beiden Oberflächen (5) gegenüber der wenigstens einen strukturierten Folie (3) eine unterschiedliche erste Oxidschichtdicke (6) aufweist.

6. Wabenkörper (1) nach Anspruch 5, wobei die wenigstens eine glatte Folie (2) eine größere erste Oxidschichtdicke (6) als die wenigstens eine strukturierte Folie (3) aufweist.

7. Wabenkörper (1) nach Anspruch 6, wobei die erste Oxidschichtdicke (6) der wenigstens einen glatten Folie (2) in einem Bereich von 60 bis 80 Nanometer liegt.

8. Wabenkörper (1) nach einem der vorherigen Ansprüche, wobei die wenigstens eine glatte Folie (2) und/oder die wenigstens eine strukturierte Folie (3) 14 bis 25 Gewichts-% Chrom und 3 bis 7 Gewichts-% Aluminium enthält.

9. Wabenkörper (1) gemäß einem der vorhergehenden Ansprüche, wobei nur selektiv in vorbestimmten Bereichen (7) Verbindungsstellen (8) zwischen benachbarten Folien (2,3) durch Hartlöten hergestellt sind.

10. Wabenkörper (1) nach einem der vorhergehenden Ansprüche, wobei der Wabenkörper (1) mit einer zusätzlichen Beschichtung (11) versehen ist, die eine Oxidschicht (13) wenigstens teilweise überdeckt.

11. Verfahren zur Herstellung eines Wabenkörpers (1) umfassend wenigstens die folgenden Schritte:
a) Bereitstellen von wenigstens einer glatten Folie (2) und wenigstens einer strukturierten Folie (3) mit voneinander unterschiedlichen, also grö-βere oder geringere, gemittelten Rauhigkeiten (12), wobei die eine Folie eine mittlere Rauhigkeit (12) Rₐ von 0,001 bis 0,3 Mikrometer und die andere Folie eine mittlere Rauhigkeit (12) Rₐ von 0,3 bis 0,7 Mikrometern aufweist, wobei die gemittelte Rauhigkeit der Folien ohne eine Beschichtung ermittelt wird und bezogen ist auf Folien ohne eine Oxidschicht.
b) Ausbilden einer Oxidschicht (13) mit einer ersten Oxidschichtdicke (6) bei der wenigstens einen glatten Folie (2) oder der wenigstens einen strukturierten Folie (3),
c) Ausbilden einer Wabenstruktur (15) aus der wenigstens einen glatten Folie (2) und der wenigstens einen strukturierten Folie (3),
d) Einfügen der Wabenstruktur (15) in ein Gehäuse (23)
e) Ausbilden fügetechnischer Verbindungen.

12. Verfahren nach Anspruch 11, wobei Schritt b) bei Temperaturen von mindestens 750°C an Luft während einer Zeit von 4 bis 8 Sekunden erfolgt.

13. Verfahren nach einem der Ansprüche 11 oder 12, wobei die Folien (2, 3) durch Walzen hergestellt werden, wobei durch eine Behandlung der Walzen durch Bürsten oder Strahlen im letzten Walzschritt Folien mit einer mittleren Rauhigkeit in einem Bereich von 0,3 bis 0,7 Mikrometern erzeugt werden.

14. Kraftfahrzeug (18), zumindest aufweisend eine Verbrennungskraftmaschine (17) und ein Abgassystem (16), sowie einen Wabenkörper (1) gemäß der Ansprüche 1 bis 10 oder hergestellt nach einem Verfahren gemäß der Ansprüche 11 bis 13.

## Claims

1. A honeycomb body (1) formed at least from at least one metallic smooth foil (2) and at least one metallic structured foil (3), wherein the smooth foil (2) has a different, namely greater or smaller, mean roughness (12) than the structured foil (3), wherein the one foil has a mean roughness (12) Rₐ of 0.001 to 0.3 micrometers and the other foil has a mean roughness (12) Rₐ of 0.3 to 0.7 micrometers, wherein the mean roughness of the foils is determined without a coating and in relation to foils without an oxide layer.

2. The honeycomb body (1) according to claim 1, wherein the at least one smooth foil (2) having a mean roughness (12) Rₐ of 0.3 to 0.7 micrometers, in particular a mean roughness (12) Rₐ of 0.5 to 0.7 micrometers.

3. The honeycomb body (1) according to claim 1 or 2, wherein the at least one structured foil (3) has a mean roughness (12) Rₐ of 0.001 to 0.3 micrometers, in particular a mean roughness (12) Rₐ of 0.1 to 0.2 micrometers.

4. The honeycomb body (1) according to one of the preceding claims, wherein the roughnesses (12) of the foils (2, 3) are measured transversely with respect to the rolling direction (4).

5. The honeycomb body (1) according to one of the preceding claims, wherein the at least one smooth foil (2) has, on its two surfaces (5), a different first oxide layer thickness (6) than the at least one structured foil (3).

6. The honeycomb body (1) according to claim 5, wherein the at least one smooth foil (2) has a greater first oxide layer thickness (6) than the at least one structured foil (3).

7. The honeycomb body (1) according to claim 6, wherein the first oxide layer thickness (6) of the at least one smooth foil (2) lies in a range from 60 to 80 nanometers.

8. The honeycomb body (1) according to one of the preceding claims, wherein the at least one smooth foil (2) and/or the at least one structured foil (3) contains 14 to 25% by weight of chromium and 3 to 7% by weight of aluminum.

9. The honeycomb body (1) according to one of the preceding claims, wherein connecting points (8) are produced between adjacent foils (2, 3) by means of brazing only selectively in predetermined regions (7).

10. The honeycomb body (1) according to one of the preceding claims, wherein the honeycomb body (1) is provided with an additional coating (11) which at least partially covers an oxide layer (13).

11. A method for producing a honeycomb body (1) comprising at least the following steps:
a) providing at least one smooth foil (2) and at least one structured foil (3) which have different, namely greater or smaller, mean roughnesses (12), wherein the one foil has a mean roughness (12) Rₐ of 0.001 to 0.3 micrometers and the other foil has a mean roughness (12) Rₐ of 0.3 to 0.7 micrometers, wherein the mean roughness of the foils is determined without a coating and in relation to foils without an oxide layer,
b) forming an oxide layer (13) with a first oxide layer thickness (6) on the at least one smooth foil (2) or the at least one structured foil (3),
c) forming a honeycomb structure (15) from the at least one smooth foil (2) and the at least one structured foil (3),
d) inserting the honeycomb structure (15) into a housing (23)
e) forming joining connections.

12. The method according to claim 11, with step b) taking place at temperatures of at least 750°C in air over a time of 4 to 8 seconds.

13. The method according to claim 11 or 12, wherein the foils (2, 3) are produced by means of rollers, wherein by means of a brushing treatment or blasting treatment of the rollers foils with a mean roughness Rₐ in a range from 0.3 micrometers to 0.7 micrometers are provided in the final rolling step.

14. A motor vehicle (18), at least having an internal combustion engine (17) and an exhaust system (16), and also having a honeycomb body (1) according to claims 1 to 10 or produced according to a method according to claims 11 to 13.

## Revendications

1. Corps en nids d'abeilles (1) au moins formé d'au moins une feuille métallique lisse (2) et d'au moins une feuille métallique structurée (3), la feuille lisse (2) ayant une rugosité (12) différente par rapport à la feuille structurée (3), donc plus élevée ou plus faible moyennée, l'au moins une feuille ayant une rugosité moyenne (12) Rₐ de 0,001 à 0,3 micromètres et l'autre feuille ayant une rugosité moyenne (12) Rₐ de 0,3 à 0,7 micromètres, la rugosité moyennée des feuilles étant déterminée sans un revêtement et se réfère à des feuilles sans couche d'oxyde.

2. Corps en nids d'abeilles (1) selon la revendication 1, l'au moins une feuille lisse (2) ayant une rugosité moyenne (12) Rₐ de 0,3 à 0,7 micromètres, notamment une rugosité moyenne (12) Rₐ de 0,5 à 0,7 micromètres.

3. Corps en nids d'abeilles (1) selon la revendication 1 ou 2, l'au moins une feuille structurée (3) présentant une rugosité moyenne (12) Rₐ de 0.001 à 0,3 micromètres, notamment une rugosité moyenne (12) Rₐ de 0,1 à 0,2 micromètres.

4. Corps en nids d'abeilles (1) selon l'une des revendications précédentes, les rugosités (12) des feuilles (2, 3) sont mesurées transversalement à la direction de laminage (4).

5. Corps en nids d'abeilles (1) selon l'une des revendications précédentes, l'au moins une feuille lisse (2) ayant sur ses deux surfaces (5) par rapport à l'au moins une feuille structurée (3) une première épaisseur de couche d'oxyde différente (6).

6. Corps en nids d'abeilles (1) selon la revendication 5, l'au moins une feuille lisse (2) ayant une première épaisseur de couche d'oxyde plus grande (6) que l'au moins une feuille structurée (3).

7. Corps en nids d'abeilles (1) selon la revendication 6, la première épaisseur de couche d'oxyde (6) de l'au moins une feuille lisse (2) se trouvant dans une gamme de 60 à 80 nanomètres.

8. Corps en nids d'abeilles (1) selon l'une des revendications précédentes, l'au moins une feuille lisse (2) et/ou l'au moins une feuille structurée (3) contenant 14 à 25 % en poids de chrome et 3 à 7 de % en poids d'aluminium.

9. Corps en nids d'abeilles (1) selon l'une des revendications précédentes, dans le cas duquel des points de liaison (8) entre des feuilles adjacentes (2, 3) ne sont fabriqués que sélectivement dans de régions prédéterminées (7) par brasage fort.

10. Corps en nids d'abeilles (1) selon l'une des revendications précédentes, le corps en nids d'abeilles (1) étant pourvu d'un revêtement supplémentaire (11) qui couvre au moins partiellement une couche d'oxyde (13).

11. Procédé destiné à la fabrication d'un corps en nids d'abeilles (1), comprenant au moins les étapes suivantes :
a) mise à disposition d'au moins une feuille lisse (2) et d'au moins une feuille structurée (3) avec des rugosités différentes l'une de l'autre, donc des rugosités (12) moyennées plus grandes ou plus faibles, l'au moins une feuille ayant une rugosité moyenne (12) Rₐ de 0,001 à 0,3 micromètres et l'autre feuille une rugosité moyenne (12) Rₐ de 0,3 à 0,7 micromètres, la rugosité moyennée des feuilles étant déterminée sans revêtement et se réfère à des feuilles sans couche d'oxyde.
b) formation d'une couche d'oxyde (13) avec une première épaisseur de couche d'oxyde (6) dans le cas de l'au moins une feuille lisse (2) ou de l'au moins une feuille structurée (3).
c) formation d'une structure en nids d'abeilles (15) à partir de l'au moins une feuille lisse et de l'au moins une feuille structurée (3).
d) introduction de la structure en nids d'abeilles (15) dans un boîtier.
e) formation de liaisons reliées par techniques de jointoiement.

12. Procédé selon la revendication 11, l'étape b) s'effectuant à des températures à l'air d'au moins 750°C, pendant une durée de 4 à 8 secondes.

13. Procédé selon l'une des revendications 11 ou 12, les feuilles (2, 3) étant fabriquées par des cylindres, grâce au traitement des cylindres par des brosses ou par le sablage dans la dernière étape de sablage des feuilles d'une rugosité moyenne dans la gamme de 0,3 à 0,7 micromètres sont générées.

14. Véhicule automobile (18) ayant au moins une machine à combustion interne (17) et un système de gaz d'échappement (16) ainsi qu'un corps en nids d'abeilles (1) selon les revendications 1 à 10 ou fabriqué selon un procédé selon les revendications 11 à 13.
